# EUROPÄISCHE PATENTSCHRIFT

(11) **EP 1 045 505 B1**
(45) Veröffentlichungstag und Bekanntmachung des Hinweises auf die Patenterteilung: **30.10.2002**
(21) Anmeldenummer: 00108338.5
(22) Anmeldetag: 14.04.2000
(51) Int. Cl.: H02K 5/20, H02K 9/19

(54) **Elektrischer, gekühlter Scheibenläufermotor**
Cooled electric disk motor
Moteur électrique, à rotor en forme de disque, refroidi

(30) Priorität: 16.04.1999 DE 19917411
(43) Veröffentlichungstag der Anmeldung: 18.10.2000
(73) Patentinhaber: BAUMÜLLER NÜRNBERG GMBH, D-90482 Nürnberg (DE)
(72) Erfinder: Richter, Axel, Dipl.-Ing., 37627 Stadtolendorf (DE)
(74) Vertreter: Götz, Georg, Dipl.-Ing.

(56) Entgegenhaltungen:
- DE-A- 4 104 740
- GB-A- 1 028 315
- US-A- 4 190 780
- PATENT ABSTRACTS OF JAPAN vol. 010, no. 332 (E-453), 12. November 1986 (1986-11-12) & JP 61 139245 A (FANUC LTD), 26. Juni 1986 (1986-06-26)

## Beschreibung

Die Erfindung betrifft einen elektrischen Scheibenläufermotor mit einer Läuferscheibe und einem gegenüberliegendem Ständer, welche beiden von einem Gehäuse mit zylindrischer Grundstruktur und integriertem Fluid-Kühlkreislauf sowohl stimseitig als auch umfangsseitig bzw. an ihrer gegebenenfalls gekrümmten Mantelfläche umfasst sind.

Der technologische Hintergrund ergibt sich beispielsweise aus US-A-4 190 780, JP-A-61 139 245, GB-A-1 028 315 oder DE-A-4 104 740.

Die Konstruktionsart des Scheibenläufermotors als Sonderbauform einer elektrischen Maschine ist allgemein bekannt. Bei hohen Leistungsanforderungen ist auch der Einsatz von Kühleinrichtungen üblich, die allerdings nur zu einer Kühlung des Elektroblech- bzw. Eisenpakets oder von sonstigen Weicheisen-Rückschlußteilen führen. Mithin entstand die Anforderung nach einem Scheibenläufermotor mit einem Kühlkreislauf, der eine effektive und starke Kühlwirkung erbringt. Dazu ist es aus DE-A-2111881 bei einem Hysteresemotor bestehend aus einer auf einem ringartigen Eisenkern angeordneten Statorwicklung und einem stirnseitig davor gelagerten, scheibenförmig ausgebildeten Rotor bekannt, die Statorwicklung mit Kühlschlangen zu flankieren, die in einem die Statorwicklung umgebenden Bettungskörper guter Wärmeleitfähigkeit verlaufen. Ferner wird vorgeschlagen, einen Statorhalter, der zur Befestigung des die Statorwicklung aufnehmenden Bettungskörpers dient, ebenfalls mit einem Kühlsystem zu versehen, um auf diesem Wege die Kühlwirkung noch weiter zu verstärken.

Ferner ist ein Scheibenläufermotor der eingangs genannten Art in Form einer Ringkrn-Synchronmaschine bekannt (DE-A-195 25 346), bei der eine Vielzahl von Statorscheiben jeweils aus einem Gehäuseabschnitt, einer Ringkernanordnung, einer diese Ringkernanordnung umschließenden Ringwicklung sowie einem zwischen zwei Ringkernen in Umfangsrichtung ausgedehnten Kühlkanal für die Durchströmung durch flüssiges Kühlmedium besteht. Weitere Kühlkanäle sind in dem Gesamt-Gehäuse in axialer Richtung sich erstreckend angeordnet. Die Kühlkanäle dienen dazu, die in der Ringkemwicklung umgesetzten Stromwärmeverluste abzuführen. Die axial verlaufenden Kühlkanäle sind in weiteren Ringkühlkanälen zusammengefaßt, welche in Motor-Umfangsrichtung verlaufen und sich in beiden Lagerschilden des Motors erstrecken. Indem allerdings die Stator-Ringkeme von Wicklungen vollständig umwickelt sind, kann sich die Kühlwirkung der Kühlkanäle, soweit sie sich im Gehäuse befinden, nur auf die stromleitenden Ringwicklungen, nicht aber auf den Statorkern direkt auswirken. Deshalb ist die Ausbildung von Kühlkanälen innerhalb des Statorkerns vorgesehen. Damit diese im Statorkern ausgebildet werden können, muß dieser allerdings mehrteilig, im bekannten Beispiel aus insgesamt vier separat gebildeten Teilstücken zusammengesetzt werden.

Mithin ergibt sich die der Erfindung zugrundeliegende Aufgabe, einen Scheibenläufermotor mit umwickelten Stator zu schaffen, der ein Kühlsystem aufweist, das eine möglichst direkte Kühlung aller wesentlichen Stator-Funktionsteile bei vermindertem Bauteile-, Montage- und Konstruktionsaufwand ermöglicht. Zur Lösung wird der im Patentanspruch 1 angegebene Scheibenläufermotor vorgeschlagen. Damit wird zur direkten Kühlung auch des oder der Stator-Eisenkerne eine jeweilige direkte Wirkungsverbindung sowohl zwischen dem Gehäuse-Stirnseitenteil und der gegenüberliegenden, freien Eisenkernseite als auch dem Gehäuse-Mantelteil und den Stator-Kupferleitern oder sonstigen Stromleitern geschaffen. Die Kühlwirkung der im Gehäuse verlaufenden Fluidleitungsabschnitte kann sich nun auch unmittelbarer auf den Eisenkern auswirken.

Zur Verstärkung der Kühlwirkung wird bei einem Scheibenläufermotor mit den eingangs genannten Merkmalen nach einer vorteilhaften Erfindungsausbildung vorgeschlagen, daß der Kühlkreislauf sich sowohl in einem oder beiden Stirnseitenteilen des Motorgehäuses als auch in dessen gekrümmten und/oder achsparallelen Mantelteil erstreckt. Damit ist eine allseitige Kühlung der Scheibenläufer-Motorteile gegeben.

Zweckmäßig ist der Kühlkreislauf mit einem, vorzugsweise einem einzigen, durchgehenden Kühlkanal mit einem Eingang und einem Ausgang realisiert, wobei der Kühlkanal das Motor-Gehäuse sowohl mantel- als auch stirnseitig durchsetzt. Insbesondere aufgrund der beiden als Ein- bzw. Ausgang dienenden Kühlkanal-Enden kann eine relativ einfache Versorgung mit Kühlfluid, beispielsweise Wasser, stattfinden. Vor allem läßt sich so einfach eine geregelte Wasserkühlung mit einer Toleranz von ± 1 Grad unter Einsatz eines Temperaturwächters betreiben.

Nach einer Ausbildungsalternative kann der Kühlkreislauf sich im Mantelteil des Gehäuses in einer oder mehreren axial hintereinander gereihten Ebenen senkrecht oder schräg zur Motor-Drehachse erstrecken, wobei eine Ausbildung mit mehreren, voneinander abgetrennten, beispielsweise kreisringartig um die Motor-Drehachse umlaufenden Kühlkanälen zweckmäßig ist. Nach einer anderen Ausbildungsalternative läuft ein einzelner Kühlkanal im Mantelteil längs einer Schraubenlinie um die Motor-Drehachse. In weiterer Ausgestaltung der Erfindung ist in einer oder beiden Stirnseitenteilen des Motorgehäuses der Verlauf des Kühlkreislaufes jeweils eben bzw. in einer Grundebene der Stirnseite liegend gestaltet.

An sich bekannt sind Scheibenläufermotoren mit einer Gehäusestruktur, die die Grundform eines nach oben offenen Topfes mit achsparalleler und/oder gekrümmter Mantelwandung und einem ebenen Bodenteil besitzen. Hierbei bietet sich als zweckmäßige Ausbildung der Erfindung an, den Kühlkreislauf sowohl in der Mantelwandung als auch im Bodenteil verlaufen zu lassen. Beide stehen dann in jeweils direkter Wirkverbindung mit dem Statorkern und der Stator-Stromleiterwicklung.

Bei der Herstellung des erfindungsgemäßen Motorgehäuses stellt sich das Problem, den Kühlkreislauf bzw. dessen einen oder mehrere Kühlkanäle in einfacher Fertigungstechnik ausbilden zu können. Zudem ist während des laufenden Motoreinsatzes es manchmal wünschenswert, die Kühlkanäle reinigen, warten oder aus sonstigen Gründen auf diese zugreifen zu können. Diesem Problemkreis trägt die Erfindung dadurch Rechnung, dass ein wenigstens zweiteiliges Gehäuse verwendet wird, das einen Innenteil und einen diesen an seiner Außenseite umfassenden Außenteil aufweist, wobei der Kühlkreislauf zwischen dem Innenteil und dem Außenteil verläuft. Dies kann beispielsweise dadurch realisiert sein, daß Kühlkanäle als offene Nuten oder Rillen in der Außenseile des Innenteils oder der Innenseite des Außenteils eingelassen bzw. ausgebildet sind. Ist ein manueller Zugriff auf den Kühlkanal notwendig, dann läßt sich dies nach einer Erfindungsausbildung leicht dadurch bewerkstelligen, daß die beiden Gehäuseteile voneinander gelöst und getrennt werden. Umgekehrt ist wieder ein schneller Zusammenbau bzw. eine Montage möglich. Bei der Fertigung kann erst das Innen- oder Außenteil mit einem oder mehreren Kühlkanälen gestaltet werden, und dann die Verbindung von Innen- und Außenteil miteinander erfolgen.

Zu einer effektiven, vor allem breitflächigen Kühlung des Stirnseiten- oder Bodenteils (letzteres im Falle der Gehäusetopfform) führt es, wenn nach einer Ausbildung der Erfindung der Kühlkreislauf oder dessen Kühlkanal im Stirnseitenoder Bodenteil längs einer oder mehrerer Krümmungen oder Schleifen vorzugsweise in einer gemeinsamen Ebene verlaufen. Diese können mit einer oder mehreren Kreisbögen versehen oder realisiert sein, die bezüglich der Motordrehachse konzentrisch und/oder symmetrisch verlaufen.

Auf der Basis der Erfindung ist bei Verwendung eines Scheibenläufermotors mit bewickeltem Stator die besonders vorteilhafte Anordnung ermöglicht, daß vom Gehäuse das oder die Stirnseitenteile mit den Eisenkernen zu deren Kühlung, und der Mantelteil mit den Stator-Wicklungen in Wirkverbindung stehen. Dadurch ist dafür Sorge getragen, daß bei einem Motor mit bewickeltem Stator und beispielsweise Permanentmagnet-Läufer alle wesentlichen Stator-Teile einer Kühlung unterworfen sind.

Weitere Einzelheiten, Vorteile und Wirkungen auf der Basis der Erfindung ergeben sich aus der nachfolgenden Beschreibung eines bevorzugten Ausführungsbeispiels der Erfindung und den Zeichnungen. Dies zeigen in
Figur 1 einen erfindungsgemäßen Scheibenläufermotor im axialem Längsschnitt
Figur 2 eine Ansicht auf den Innengehäuseteil des Motors in radialer Richtung, und
Figur 3 eine axiale Stirnansicht auf den Innengehäuseteil gemäß Figur 2.

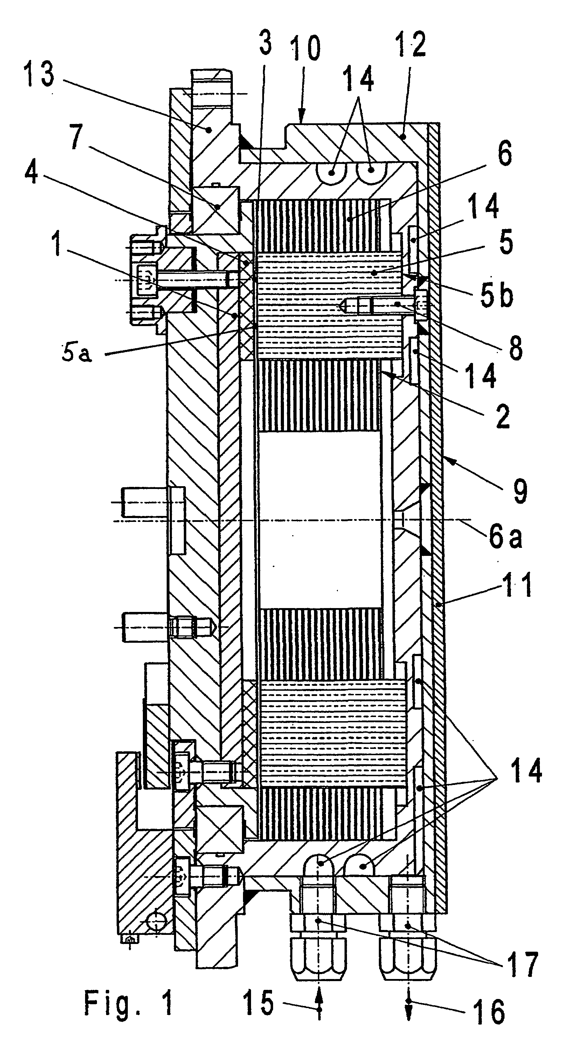

Gemäß Figur 1 liegen beim erfindungsgemäßen Scheibenläufermotor die Läuferscheibe 1 und der Stator 2 über einen Luftspalt 3 einander gegenüber. Dieser ist zwischem einem Dauermagnetsegment 4, der auf der Läuferscheibe in peripherer Lage angeordnet ist, und einem weichmagnetischem ringförmigen Eisenkernpaket 5 angeordnet, das einen wesentlichen Teil des Stators ausmacht und von einem Wickelkopf 6 umgeben ist. Die Umwicklung mit dem Wickelkopf bzw. Stromleitern 6 ist dergestalt bewerkstelligt, dass die parallel zur Motorachse 6a verlaufende Seite 5a des Eisenkernpakets 5 vom Wickelkopf 6 bzw. den Stromleitern direkt umfaßt ist. Dagegen verbleibt die Seite 5b des Eisenkempakets 5, die quer zur Motorachse 6a verläuft, frei von Stromleitern. Durch elektrische Ansteuerung des Wickelkopfs 6 in Wirkverbindung mit dem Eisenkern 5 wird im Luftspalt 3 ein axiales Drehfeld erzeugt, welches die über eine Lagereinheit 7 rotierbare Läuferscheibe 1 in Drehung versetzt.

Gemäß Figur 1 ist der Stator 2 mittels Zylinderschrauben 8 an einem Motorgehäuse fixiert, das eine zylinderartige und nach einer Stirnseite zur Läuferscheibe hin offene Topfform mit einer Bodenseite 9 und einer achsparallelen Mantelseite 10 aufweist. Unmittelbar hinter einem Außendeckel 11, welcher den bodenseitigen Abschluß des Motorgehäuses 9, 10 bildet, ist die Zylinderschraube 8 fixiert und erstreckt sich achsparallel in das Eisenkernpaket 5. Der flachscheibenförmige Außendeckel 11 liegt mit seiner Innenseite an der Außen-Stirnseite eines Außengehäuseteils 12 an, welches seinerseits mit seinen Innenseiten ein Innengehäuseteil 13 konzentrisch umfaßt. Zwischen dem Außenund Innengehäuseteil 12, 13 sind eine Vielzahl von Fluid-Leitungsabschnitten 14 sowohl mantelseitig als auch bodenseitig verlaufend ausgebildet, wobei diese Leitungsabschnitte 14 als Vertiefungen, Nuten oder Rillen in der dem Außengehäuseteil 12 zugewandten Außenseite des Innengehäuseteils 13 realisiert sind. Die Leitungsabschnitte 14 sind zu einem einzigen Kühlkanal bzw. Kühlkreislauf mit einem Fluideingang 15 und einem Fluidausgang 16 zusammengesetzt und liegen, soweit sie in der Gehäuse-Mantelseite 10 verlaufen, dem Wickelkopf 6 und, soweit sie in der Bodenseite 9 verlaufen, dem Eisenkernpaket 5 bzw. dessen ohne Stromwicklungen verbliebenen Querseite 5b in direkter Wärme- bzw. Kühlungsverbindung gegenüber. Zwischen den Fluidleitungsabschnitten 14 und den jeweiligen Statorteilen (Wickelkopf 6, Eisenkempaket 5) befindet sich praktisch nur Innengehäuseteil-Werkstoff, der nach einer vorteilhaften Ausbildung der Erfindung mit vemachlässigbarem Wärmeleitwiderstand ausgeführt sein kann. Die Fluid- Ein- und Ausgänge 15,16 sind mittels Gewinde-Einschraubungen 17 realisiert, welche radiale Passagen für beispielsweise Kühlwasser bilden und den Außengehäuseteil 12 radial durchsetzen.

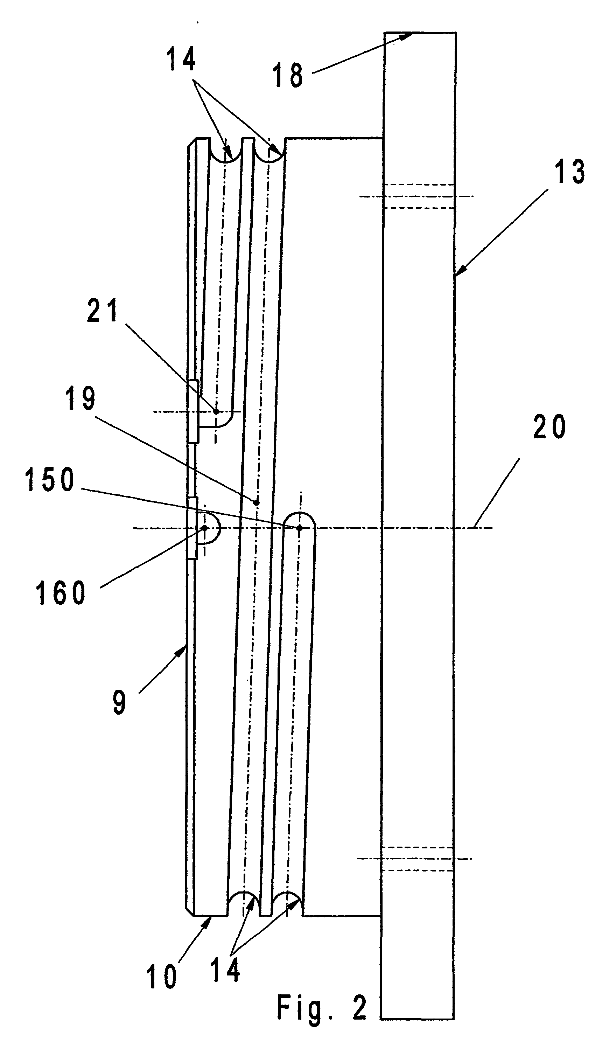

In Figur 2 ist die topfartige Struktur des Innengehäuseteils 13 dargestellt, wobei auf der Außen-Mantelseite 18 der Kühlkanal 19, zusammengesetzt aus dem Fluid-Leitungsabschnitten 14, schraubenlinienartig um die Mittel- und Motordrehachse 20 verläuft. Zu letzterer kongruent bzw. radial verlaufen die Anschlüsse 150, 160 für die oben genannten Fluid-Ein- und Ausgänge 15, 16. Vom Eingangs-Anschluß 150 aus verläuft der Kühlkanal 19 in mehreren schraubenlinienartigen Umläufen bis zur Bodenseite 9, wo er über einen etwa rechtwinkligen, abgerundeten Knick 21 seinen bisherigen Verlauf um die Motorachse 20 parallel bzw. konzentrisch zum Motorumfang in einen Verlauf abändert, der in der Grundebene der Bodenseite 9 liegt.

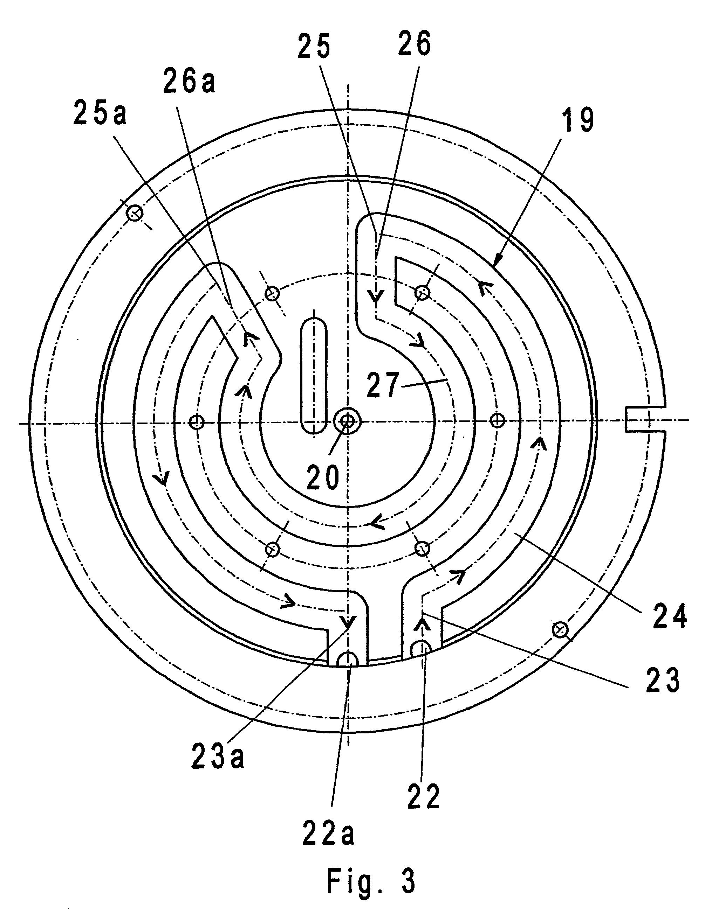

Der Verlauf des Kühlkanals 19 in der Grundebene der Außen-Bodenseite 9 des Innengehäuseteils 13 ist in Figur 3 in axialer Draufsicht dargestellt. Von einer Fortsetzungstelle 22, in welche die in Figur 2 dargestellte Knickstelle 21 übergeht, verläuft der Kühlkanal 19 zunächst in einem kurzen linearen Abschnitt 23 zum mittigen Bereich der Stirnseite und biegt dann in einen äußeren Kreisbogenabschnitt 24 ein. Dieser durchläuft einen Winkelumfang von knapp 180 Grad und geht an seinem, dem linearen Anschnitt 23 abgewandtem Ende über eine spitzwinklige Knickstelle 25 in einen weiteren linearen Abschnitt 26 nach innen zum mittigen Bereich über. Dieser Abschnitt 26 wird nach kurzem, radialparallelem Verlauf von einem inneren Kreisbogenabschnitt 27 fortgesetzt, welcher einen Winkelumfang von mehr als 270 Grad und weniger als 360 Grad um die Motor-Drehachse bzw. Mittelachse 20 herum umläuft. Die letztere verläuft senkrecht zur Zeichenebene der Figur 3. Der Kühlkanal 19 ändert seine Richtung am Ende des inneren Kreisbogenabschnitts 27 in einen weiteren linearen Abschnitt 26a analog zu dem zuvorgenannten, der analog dem zuvor erläutertem Verlauf über eine weitere, spitzwinklige Knickstelle 25a und einem weiteren äußerem Kreisbogenabschnitt 24a und einer weiteren, aber radial gelegenen Fortsetzungstelle 22a zur Mantelseite 10 gemäß Figur 1 und 2 zurückkehrt. Über die letztgenannte, weitere Fortsetzungstelle 22a kann Kühlwasser oder sonstiges Fluid zur radial in der Mantelseite 10 verlaufenden Anschlußstelle 160 und von dort weiter zum Fluidausgang 16 fließen.

Zur Wirkungsweise des erfindungsgemäßen Scheibenläufer-Kühlsystems sei noch folgendes ausgeführt: Der in Figur 1 und 2 verdeutlichte Schraubenlinienverlauf des Kühlkanals 19 bewirkt primär eine Kühlung der Wickelköpfe 6 des Stators 2, während die in der Grundebene der Bodenseite 9 verlaufenden Abschnitte des Kühlkanals 19 gemäß Figur 1 und 3 primär zu einer Kühlung der Eisenkempakete 5 des Motors führen. Um eine Temperaturtoleranz von ± 1 Grad ° zu gewährleisten, kann über einen Temperaturwächter die Stromstärke am Fluideingang 15 gemäß Figur 1 gesteuert bzw. geregelt werden.

### Bezugszeichen-Liste

- 1 -: Läuferscheibe
- 2 -: Stator
- 3-: Luftspalt
- 4 -: Dauermagnetsegment
- 5 -: Eisenkempaket
- 5a: Achsparallele Seite
- 5b: Querseite
- 6-: Wickelkopf
- 6a: Motorachse
- 7 -: Lagereinheit
- 8-: Zylinderschraube
- 9 -: Bodenseite
- 10-: Mantelseite
- 11 -: Außendeckel
- 12 -: Außengehäuseteil
- 13-: Innengehäuseteil
- 14-: Pluidleitungsabschnitte
- 15-: Fluideingang
- 16-: Fluidausgang
- 17-: Gewinde-Einschraubung
- 18-: Außen-Mantelseite
- 19-: Kühlkanal
- 20 -: Mittelachse
- 21 -: Knick
- 22 -: Fortsetzungsstelle - 22a
- 23 -: linearer Abschnitt - 23a
- 24 -: äußerer Kreisbogenabschnitt - 24a
- 25 -: spitzwinklige Knickstelle - 25a
- 26 -: linearer Abschnitt - 26a
- 27 -: innerer Kreisbogenabschnitt
- 150-: Anschluß
- 160-: Anschluß

## Patentansprüche

1. Elektrischer Scheibenläufermotor mit einer Läuferscheibe (1) und einem axial gegenüberliegenden Ständer (2), von welchen (1,2) der Ständer von einem Gehäuse (12,13) sowohl an der Lagerschild- oder Stirnseite (9) quer zur Motor-Drehachse (20) als auch an der Längs- oder Mantelseite (10) parallel zur Motor-Drehachse (20) umfaßt oder umgeben ist, wobei der Stator (2) einen oder mehrere mit Kupferleitern oder sonstigen Stromleitern (6) umwickelte Eisenkerne (5) aufweist, und das Gehäuse (12,13) einen integrierten Fluid-Kühlkreislauf (19) aufweist, der sich sowohl in einem oder beiden Stirnseitenteilen (9) des Gehäuses (12,13) als auch in dessen Längsseiten- beziehungsweise Mantelteil (10) erstreckt, **dadurch gekennzeichnet, dass**
(a) das Gehäuse (12,13) mit einem Innengehäuseteil (13) und einem daran anliegendem Außengehäuseteil(12) ausgebildet ist, wobei der Kühlkreislauf zwischen dem Innengehäuseteil (13) und dem Außengehäuseteil (12) verläuft,
(b) der oder die Eisenkerne (5) nur an ihren achsparallelen Seiten umwikkelt sind, und
(c) die dort umgewickelten Stromleiter (6) dem oder den im Längsseitenbeziehungsweise Mantelteil (10) des Gehäuses (12,13) verlaufenden Abschnitten des Kühlkreislaufs (19) über Werkstoff des Innengehäuseteils (13) gegenüberliegen,
(d) wohingegen eine ohne Stromleiter-Umwicklung verbliebene Seite des oder der Eisenkerne (5) über Werkstoff des Innengehäuseteils (13) dem oder den Abschnitten des Kühlkreislaufs (19) gegenüberliegt, die in der oder den Stirnseitenteilen (9) des Gehäuses (12,13) verlaufen.

2. Motor nach Anspruch 1, **dadurch gekennzeichnet, daß** der Kühlkreislauf (19) einen durchgehenden Kühlkanal mit einem Eingang (15) und einem Ausgang (16) aufweist, und der Kühlkanal (19) das Gehäuse (12,13) sowohl mantel- als auch stirnseitig (10,9) durchsetzt.

3. Motor nach Anspruch 1 oder 2, **dadurch gekennzeichnet, daß** der Kühlkreislauf (19) im Mantelteil (10) in mehreren axial hintereinandergereihten Ebenen oder als einzelner Kühlkanal im Mantelteil (10) längs einer Kreis- oder Schraubenlinie um die Motordrehachse (20) verläuft und in dem einen oder beiden Stirnseitenteilen (9) jeweils in deren Grundebene verläuft.

4. Motor nach Anspruch 2 oder 3, **dadurch gekennzeichnet, daß** der Kühlkanal im Übergangsbereich vom Mantel- zum Stirnseitenteil (10,9) mit einer Biegung, Krümmung oder einem Knick (21) verläuft.

5. Motor nach einem der vorangehenden Ansprüche, **dadurch gekennzeichnet, daß** das Gehäuse (12,13) einen an einer Stirnseite offenen Gehäusetopf mit achsparalleler Mantelwandung (10) und quer zur Motorachse verlaufendem Bodenteil (9) als Stirnseite aufweist, und der Kühlkreislauf (19) sowohl die Mantelwandung (10) als auch den Bodenteil (9) durchsetzt, und die Mantelwandung mit den umgewickelten Stromleitern, und der Bodenteil mit der ohne Stromleiter-Umwicklung verbliebenen Eisenkernseite zur Kühlung in Wirkungsverbindung stehen.

6. Motor nach einem der vorangehenden Ansprüche, **dadurch gekennzeichnet, daß** der Kühlkreislauf oder dessen Kühlkanal (19) im Stirnseitenteil oder einem Bodenteil (9) längs einer oder mehreren Krümmungen oder Schleifen verläuft.

7. Motor nach einem der vorangehenden Ansprüche, **dadurch gekennzeichnet, daß** der Kühlkreislauf oder dessen Kühlkanal (19) im Stirnseitenteil oder einem Bodenteil (9) längs einer oder mehreren bezüglich der Motor-Drehachse (20) konzentrischen Kreisbögen (24,24a,27) verläuft.

8. Innen- oder Außengehäuseteil (13,12) in Topfform für den Motor nach einem der vorangehenden Ansprüch, **gekennzeichnet durch** ein oder mehrere Nuten zum Leiten von Kühlfluid, die in der Oberfläche der Außen- beziehungsweise Innenwandung des jeweiligen Gehäuseteils Vertiefungen bilden.

## Claims

1. Electric disc motor with a rotor disc (1) and an axially opposite stator (2), of which (1, 2) the stator comprises or is surrounded by a housing (12, 13) both on the end shield side or end face (9), transverse to the motor axis of rotation (20) and on the longitudinal side or casing (10) parallel to the motor axis of rotation (20), the stator (2) having one or more iron cores around which copper conductors or other current conductors (6) are wound, and the housing (12, 13) having an integral fluid coolant cycle (19), which extends both in one or both end-face parts (9) of the housing (12, 13) and into its longitudinal-side part or casing part (10), **characterised in that**
a) the housing (12, 13) is formed with an inner housing part (13) are an outer housing part (12) abutting the same, the coolant cycle extending between the inner housing part (13) and the outer housing part (12),
b) the iron core(s) (5) only has/have a coil on its axially parallel sides
c) the current conductor (6) wound thereon is opposite the section(s) of the coolant cycle (19) extending in the longitudinal-side part or casing part,
d) whereas a side of the iron core(s) (5) left without current conductor winding are opposite, via material of the inner housing part (13), the section(s) of the coolant cycle (19) extending in the end-face parts (9) of the housing (12, 13).

2. Motor according to claim 1, **characterised in that** the coolant cycle (19) has a continuous coolant channel with an inlet (15) and an outlet (16), and the coolant channel (19) passes through the housing (12, 13) both on the casing and on the end face (10, 9).

3. Motor according to claim 1 or 2, **characterised in that** the coolant cycle (19) extends in the casing part (10) in plural axially consecutive planes or as a single coolant channel in the casing part (10) along a circular or helical line around the motor axis of rotation (20), and extends in one or both end-face parts (9) respectively in their base plane.

4. Motor according to claim 2 or 3, **characterised in that** the coolant channel extends in the transition region from the casing to the end face part (10, 9) with a bow, curve or bend (21).

5. Motor according to one of the preceding claims, **characterised in that** the housing (12, 13) has a housing pot having axially parallel casing walls (10) and being open at one end face, and a base part (9) extending transverse to the motor axis as an end face, and the coolant cycle (19) penetrates both the casing wall (10) and the base part (9), and the casing wall is in active connection with the wound current conductors, and the base part is in active connection with the iron core side remaining without a winding, for the purpose of cooling.

6. Motor according to one of the preceding claims, **characterised in that** the coolant cycle or its coolant channel (19) extends in the end-face part or a base part (9) along one or more curvatures or loops.

7. Motor according to one of the preceding claims, **characterised in that** the coolant cycle or its coolant channel (19) extends in the end-face part or a base part (9) along one or more arcs (24, 24a, 27) which are concentric to the motor axis of rotation (20).

8. Inner or outer housing part (13, 12) in the shape of a pot for the motor according to one of the preceding claims, **characterised by** one or more grooves for conducting coolant fluid, which form recesses in the surface of the outer or inner wall of the respective housing part.

## Revendications

1. Moteur électrique à rotor en forme de disque, comprenant un disque-rotor (1) et un stator (2) axialement en regard, parmi lesquels (1, 2) le stator au moins est entouré ou ceint d'un carter (12, 13) aussi bien sur le côté flasque ou côté frontal (9) transversalement à l'axe de rotation (20) du moteur que sur le côté longitudinal ou périphérique (10), parallèlement à l'axe de rotation (20) du moteur, le stator (2) présentant un ou plusieurs noyaux de fer (5) entourés d'enroulements de conducteurs de cuivre ou autres conducteurs de courant (6), et le carter (12, 13) présentant un circuit de refroidissement intégré à fluide (19), qui s'étend aussi bien dans une ou les deux parties de côté frontal (9) du carter (12, 13) que dans sa partie de côté longitudinal ou sa partie périphérique (10),
**caractérisé en ce que**
(a) le carter (12, 13) est réalisé sous la forme d'une partie de carter intérieure (13) et, d'une partie de carter extérieure (12) s'appliquant contre celle-ci, le circuit de refroidissement s'étendant entre la partie de carter intérieure (13) et la partie de carter extérieure (12),
(b) le ou les noyaux de fer (5) ne sont entourés d'enroulements que sur leurs faces parallèles à l'axe, et
(c) les conducteurs de courant (6) qui y sont enroulés sont placés en regard, par l'intermédiaire de matériau de la partie de carter intérieure (13), du ou des tronçons du circuit de refroidissement (19) s'étendant dans la partie de côté longitudinal ou la partie périphérique (10) du carter (12, 13),
(d) alors qu'une face du ou des noyaux de fer (5), restée dépourvue d'enroulement de conducteurs de courant, est en regard, par l'intermédiaire de matériau de la partie de carter intérieure (13), du ou des tronçons du circuit de refroidissement (19) qui s'étendent dans la ou les parties de côté frontal (9) du carter (12, 13).

2. Moteur selon la revendication 1, **caractérisé en ce que** le circuit de refroidissement (19) comprend un canal de refroidissement continu avec une entrée (15) et une sortie (16), et le canal de refroidissement (19) traverse le carter (12, 13) aussi bien côté périphérique que côté frontal (10, 9).

3. Moteur selon la revendication 1 ou 2, **caractérisé en ce que** le circuit de refroidissement (19) s'étend dans la partie périphérique (10), dans plusieurs plans se succédant axialement, ou en tant que canal de refroidissement unique dans la partie périphérique (10), le long d'une ligne circulaire ou hélicoïdale autour de l'axe de rotation (20) du moteur, et s'étend dans l'une des ou les deux parties de côté frontal (9), dans le plan de base de chacune de ces parties.

4. Moteur selon la revendication 2 ou 3, **caractérisé en ce que** le canal de refroidissement s'étend suivant une inflexion, une courbure ou un coude (21) dans la zone de transition de la partie périphérique à la partie de côté frontal (10, 9).

5. Moteur selon l'une des revendications précédentes, **caractérisé en ce que** le carter (12, 13) comprend une cloche de carter ouverte sur une face frontale avec une paroi périphérique (10) parallèle à l'axe et une partie de fond (9) s'étendant transversalement à l'axe du moteur en tant que face frontale, et le circuit de refroidissement (19) traverse aussi bien la paroi périphérique (10) que la partie de fond (9), et en vue du refroidissement, la paroi périphérique est en interaction avec les conducteurs de courant enroulés, et la partie de fond avec la face du noyau de fer restée dépourvue d'enroulement de conducteurs de courant.

6. Moteur selon l'une des revendications précédentes, **caractérisé en ce que** le circuit de refroidissement ou son canal de refroidissement (19) s'étend dans la partie de côté frontal ou dans une partie de fond (9), le long d'une ou de plusieurs courbures ou boucles.

7. Moteur selon l'une des revendications précédentes, **caractérisé en ce que** le circuit de refroidissement ou son canal de refroidissement (19) s'étend dans la partie de côté frontal ou dans une partie de fond (9), le long d'un ou de plusieurs arcs de cercle (24, 24a, 27), concentriques à l'axe de rotation (20) du moteur.

8. Partie de carter intérieure ou extérieure (13, 12) en forme de cloche destinée au moteur selon l'une des revendications précédentes, **caractérisée par** une ou plusieurs rainures destinées à conduire du fluide de refroidissement, qui forment des creux dans la surface de la paroi extérieure, respectivement intérieure, de la partie de carter considérée.
